# EUROPÄISCHE PATENTSCHRIFT

(11) **EP 0 495 385 B1**
(45) Veröffentlichungstag und Bekanntmachung des Hinweises auf die Patenterteilung: **19.05.1999**
(21) Anmeldenummer: 92100218.4
(22) Anmeldetag: 09.01.1992
(51) Int. Cl.: B01D 51/10, B01D 47/06, B01F 5/04, B01F 5/06, B01F 3/04, F24F 6/14

(54) **Verfahren für den Stoffaustausch zwischen flüssigen und gasförmigen Medien**
Process for material exchange between liquid and gazeous fluids
Procédé pour l'échange de matière entre fluides liquides et gazeux

(30) Priorität: 17.01.1991 CH 129/91
(43) Veröffentlichungstag der Anmeldung: 22.07.1992
(73) Patentinhaber: GALIPAG, CH-8500 Frauenfeld (CH)
(72) Erfinder: Gasser, Hermann, CH-8500 Frauenfeld (CH)
(74) Vertreter: Patentanwälte Schaad, Balass, Menzl & Partner AG

(56) Entgegenhaltungen:
- EP-A- 0 352 902
- GB-A- 364 239

## Beschreibung

Die Erfindung betrifft ein Verfahren zur Anreicherung eines gasförmigen Mediums mit einem flüssigen Mediums gemäss dem Oberbegriff von Anspruch 1 sowie eine Vorrichtung für die Ausführung des Verfahrens.

Beispielsweise für die Luftbefeuchtung oder die Rauchgasreinigung ist es bekannt, durch Sprühdüsen eine Flüssigkeit in einen im Querschnitt verhältnismässig grossen Strömungskanal einzusprühen, um zu erreichen, dass ein möglichst grosser Anteil der Flüssigkeit in den Gasstrom hinein verdampft. Am Ende des Strömungskanals sind Prallbleche vorgesehen, um nicht verdampfte Flüssigkeitstropfen abzuscheiden und in ein Sammelbecken zurückzuführen.

Aus der GB-A-364,239 ist eine Vorrichtung zum Waschen von Gasen bekannt, die gleichzeitig zum Befeuchten oder Entfeuchten von Gasen verwendet werden kann. Die Vorrichtung weist eine Sprühkammer auf, in der die zu waschende Flüssigkeit in eine Gasströmung eingesprüht wird. Der Sprühkammer ist ein Skrubber nachgeschaltet, in der mit einer Vielzahl von kleinen Löchern versehene Platten angeordnet sind. Indem das Gas durch die Perforationen gezwungen wird, wird eine starke Verwirbelung und ein vollständigeres Auswaschen des Gases erzielt.

In der EP-A- 0 352 902 ist eine Vorrichtung zum Massen- und Wärmeaustausch zwischen einem Fluidstrom und einer Grenzschicht, z.B. an einer Membrane, beschrieben. Die Vorrichtung weist einen Strömungskanal des Fluids und eine Pumpe zum pulsierten Zuführen des Fluids auf. Zur Erzielung eines besseren Austausches sind im Strömungskanal Schikanen zur Verwirbelung des Fluids angeordnet.

Der Erfindung liegt die Aufgabe zugrunde, ein Verfahren der genannten Art zu finden, durch das ein intensiverer Stoffaustausch erreicht wird, so dass die Vorrichtung für die Ausführung des Verfahrens bei hoher Leistung kompakter gebaut werden kann und ausserdem sich ein stark verringerter Anteil an nicht verdampftem Rücklaufwasser ergibt. Die Lösung dieser Aufgabe erfolgt aufgrund der Merkmale der Patentanspruchs 1. Eine Vorrichtung für die Ausführung des Verfahrens ist Gegenstand des Patentanspruchs 4. Die abhängigen Patentansprüche betreffen bevorzugte Ausführungsformen des Verfahrens und der Vorrichtung.

Durch die Erfindung wird eine überraschend starke Verbesserung des Stoffaustausches erzielt, so dass eine verhältnismässig klein bemessene Vorrichtung ausreicht, um das gasförmige Medium bis zur Sättigung mit flüssigem Medium anzureichern. Ausserdem ergibt sich in dem Strömungskanal trotz der Schikanen ein wesentlich geringerer Strömungswiderstand, als zu erwarten wäre. Vermutlich entstehen in den Räumen zwischen den Schikanen stehende Luftwirbel, die den axial gerichteten Hauptstrom führen, so dass der Strömungswiderstand trotz des Energieaufwandes für die Wirbelerzeugung relativ gering ist. Der verstärkte Stoffaustausch ist durch die besondere Strömungsdynamik erklärbar, die durch periodische Druckwechsel und Geschwindigkeitsänderungen gekennzeichnet ist (Resonanz), wie sie durch die Anordnung der Schikanen bzw. der von ihnen gebildeten Hohlräumen (Resonanzräume) erzwungen werden.

Im folgenden wird die Erfindung anhand von in den Zeichnungen dargestellten Ausführungsbeispielen näher erläutert. Es zeigt:
- Fig.1: eine längs geschnittene Teildarstellung der erfindungsgemässen Vorrichtung im Bereich von Schikanen,
- Fig.2: eine Teildarstellung einer Schikane der Vorrichtung nach Fig. 2,
- Fig.3 bis Fig.5: Gestaltungsbeispiele für die Querschnittsform eines Strömungskanals einer erfindungsgemässen Vorrichtung,
- Fig.6: eine perspektivische Teildarstellung einer wabenartigen Anordnung von zueinander parallelen Strömungskanälen.

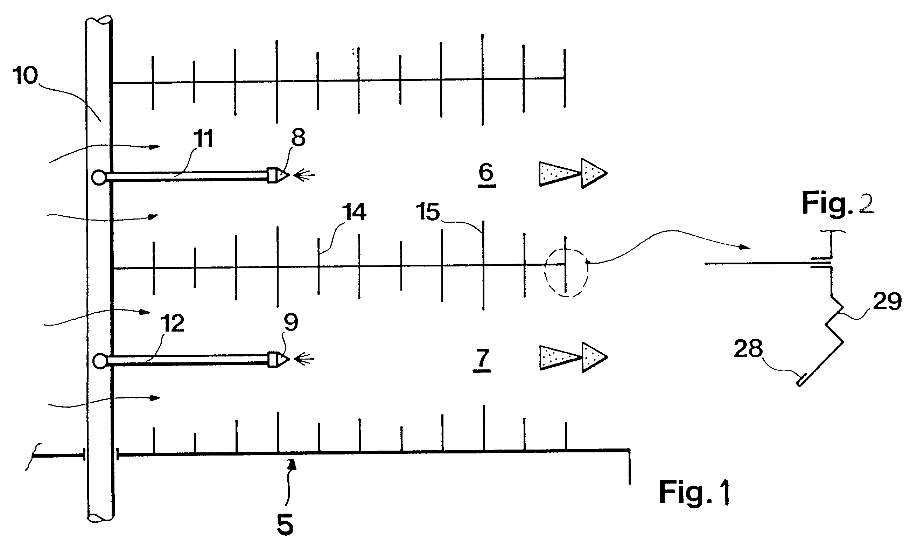

In dem Strömungskanal der Vorrichtung ist hinter der Einströmöffnung ein Axialgebläse angeordnet nicht dargestellt. An dieses schliesst sich eine Führungsstrecke an, so dass das gasförmige Medium in gleichmässiger Strömung zu dem Bereich 5 der Vorrichtung gelangt, in dem beide Medien zusammengebracht werden. In diesem Bereich kann die Vorrichtung entsprechend dem Ausführungsbeispiel nach Fig. 1 in mehrere zueinander parallele Teilkanäle 6,7 (Fig.1) unterteilt sein, in dem jeeine Hochdruckdüse 8,9 angeordnet ist, die das flüssige Medium in sehr kleinen Tropfen in den Gasstrom verteilt. Die Zuführung des flüssigen Mediums erfolgt über ein in dem Strömungskanal 1 angeordnetes Rohrleitungsgitter 10, von dem aus parallel zur Achse des Strömungskanals 1 jeweils eine Düsenleitung 11,12 zentral in jeden Teilkanal 6,7 führt, an dessen Ende sich die jeweilige Hochdruckdüse 8,9 befindet. Eine geeignete Hochdruckdüse: JATO-Molekularzerstäuber wird z.B. von der JATO-Düsenbau AG, CH-6015 Reussbühl geliefert. Vom Gasstrom nicht aufgenommenes flüssiges Medium, wie es insbesondere in der Anlaufphase der Vorrichtung auftreten kann, wird vom untersten Bereich des Strömungskanals über eine Leitung abgeführt.

Um im Gasstrom, dort wo das flüssige Medium in versprühter Form in den Strömungskanal eingebracht wird, pulsierend Geschwindigkeitsänderungen zu erzeugen, sind in dem Bereich 5 oder in den genannten Teilkanälen 6,7 zahlreiche Schikanen 14,15 eingebaut, die durch ihre in Strömungsrichtung reihenförmige Anordnung zwischen sich als Resonanzräume wirkende Hohlräume bilden und zu periodischen starken Einschnürungen des Strömungsverlaufs führen. Die sich dadurch ergebenden besonderen Strömungsformen bewirken eine wesentliche Verbesserung des Stoffaustausches, ohne dass der Strömungswiderstand sich dabei zu stark erhöht.

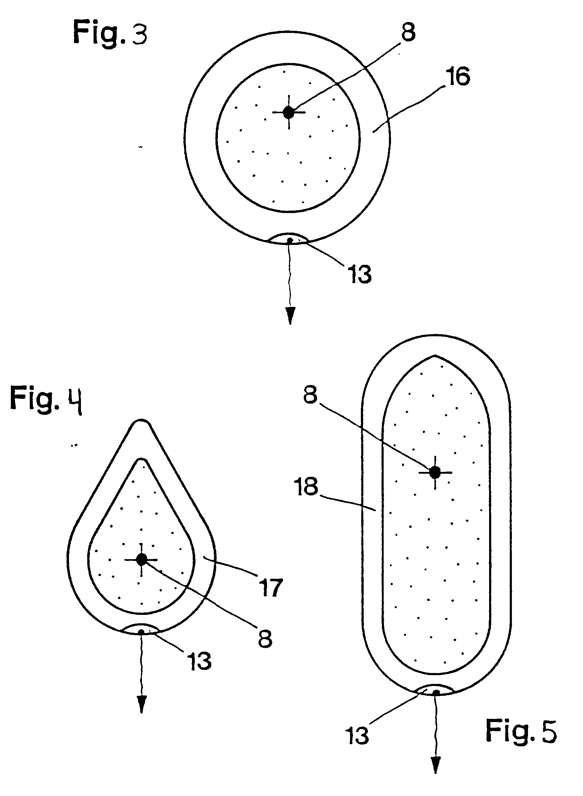

Die Querschnittform des Strömungskanals oder der Strömungsteilkanäle kann verschieden ausgeführt werden, wie die Beispiele der Fig. 3 bis 5 und 6 veranschaulichen. Dabei ragen die Schikanen 16,17,18,19 vorzugsweise in Umfangsrichtung des Querschnittes gleichbleibend in den Strömungskanal hinein, bzw. sind sie mit einer konstanten, radial gemessenen Breite versehen, so dass sie der Querschnittskontur des Strömungskanals folgen. Die Querschnittsformen der Fig.4 und 5 bewirken im unteren Querschnittsbereich eine schnellere Strömung, so dass nach dort absinkende Tröpfchen besser durch den Gasstrom wieder mitgerissen werden. Ausserdem ergibt sich eine bessere Drainage von die Kanalwand benetzender Flüssigkeit. Durch die erfindungswesentlichen Schikanen wird jedoch weitgehend verhindert, dass sich Flüssigkeit an der Kanalwand aus dem Gasstrom ausscheiden kann. Für den Abfluss der sich im unteren Teil des Strömungskanals ansammelnden Flüssigkeit wird dieser leicht geneigt angeordnet, und die ringförmigen Schikanen haben unten eine kleine Oeffnung 13.

In den dargestellten Beispielen bestehen die Schikanen aus der Querschnittsform des Strömungskanals angepassten, vorzugsweise ringförmigen oder scheibenförmigen, Blechteilen, die für eine verstärkte Verwirbelung entgegen der Strömungsrichtung entlang des Randes abgebogen sein können oder die kegelförmig gebogen sind. Eine Weitere Variante der Formgebung der Strömungshindernisse mit eingefalztem Rand 28 und Auswellungen 29 ist in Fig. 2 gezeigt.

Für eine ausreichende Wirkung der Schikanen ragen diese erheblich in den Strömungsquerschnitt des Strömungskanals hinein, beispielsweise um ein Drittel seines Radius, und ihr axialer Abstand voneinander liegt in der Grössenordnung ihrer radialen Dimension.

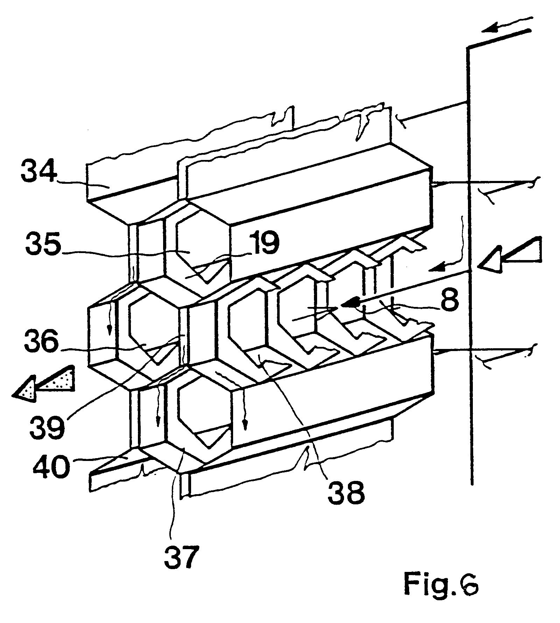

Fig.6 zeigt ein Ausführungsbeispiel der Vorrichtung, bei der wellenförmig gebogene Bleche mit geringem Abstand parallel zueinander angordnet sind, so dass sie mehrere Strömungskanäle 34 bis 38 mit dazwischenliegenden Abflusspalten 39 bilden, die in den darunterliegenden Strömungskanal führen.

## Patentansprüche

1. Verfahren zur Anreicherung eines gasförmigen Mediums mit einem flüssigen Medium durch Versprühen des flüssigen Mediums in eine durch Zwangsförderung erzeugte Strömung des gasförmigen Mediums, dadurch gekennzeichnet, dass das gasförmige Medium durch in Strömungsrichtung aufeinanderfolgende Verengungen und Erweiterungen des Strömungsweges geführt wird, wobei die Verengungen von in den Strömungskanal hineinragenden Schikanen gebildet sind, die einen freien Durchlass definieren, die zwischen sich als Resonanzräume wirkende Hohlräume begrenzen, so dass das in einer einzigen Strömung geführte gasförmige Medium in Kontakt mit dem versprühten Medium Geschwindigkeits- und Druckänderungen erfährt und das flüssige Medium mittels mindestens einer Hochdruckdüse mit einem Druck von 5 bis 600 bar in die Strömung des gasförmigen Mediums, die bereits mindestens eine Verengung passiert hat, eingesprüht wird.

2. Verfahren nach Anspruch 1, dadurch gekennzeichnet, dass das gasförmige Medium bis zur Sättigung mit dem flüssigen Medium angereichert wird.

3. Verfahren nach Anspruch 1, dadurch gekennzeichnet, dass das flüssige Medium mit der Hochdruckdüse (8, 9) mit einem Druck im Bereich von 60 bis 600 bar versprüht wird.

4. Vorrichtung für die Ausführung des Verfahrens nach Anspruch 1, mit einer Einrichtung zur Erzeugung eines Gasstromes, mindestens einem Strömungskanal für die Führung des gasförmigen Mediums und mit mindestens einer Hochdruckdüse, die in den Strömungskanal mündet, dadurch gekennzeichnet, dass zumindest in einem Teil (5) des Strömungskanals (1) eine Anzahl von quer zur Achse des Strömungskanals (1) gerichtete Schikanen (14-27) mit in Strömungsrichtung gerichtetem Abstand voneinander vorgesehen sind, die den Strömungsquerschnitt örtlich eng begrenzt stark verringern und zwischen sich Hohlräume bilden, wobei die Mündung der mindestens einen Hochdruckdüse (8,9) in diesem Teil (5) des Strömungskanals angeordnet ist und der mit den Schikanen (14-27) versehene Teil (5,5',5'') des Strömungskanals in Strömungsrichtung vor der Mündung der Hochdruckdüse (8,9) beginnt.

5. Vorrichtung nach Anspruch 4, dadurch gekennzeichnet, dass die Schikanen durch blendenartige Querwände (16-20) des Strömungskanals (1) gebildet sind, so dass sie durchströmt werden.

6. Vorrichtung nach Anspruch 4, dadurch gekennzeichnet, dass in dem Strömungskanal (1,5') sowohl durchströmte als auch umströmte Schikanen angeordnet sind.

7. Vorrichtung nach einem der Ansprüche 4 bis 6, dadurch gekennzeichnet, dass die Schikanen (14-17,18,19) aus senkrecht zur Achse des Strömungskanals (1,5,5',5'') gerichteten ebenen oder leicht gekrümmten dünnen Wänden bestehen.

8. Vorrichtung nach einem der Ansprüche 4 bis 7, dadurch gekennzeichnet, dass mehrere Strömungskanäle mit wabenartigem Gesamtquerschnitt parallel zueinander angeordnet sind, wobei benachbarte Strömungskanäle gemeinsame Wände aufweisen.

## Claims

1. Process for enriching a gaseous medium with a liquid medium by spraying the liquid medium into a flow of the gaseous medium generated by forced delivery; characterised in that the gaseous medium is passed, in the direction of flow, through successive constrictions and widenings of the flow path, the constrictions being formed by obstacles which:-protrude into the flow channel, define a free passage, and between themselves delimit cavities acting as resonance spaces so that the gaseous medium, which is guided in a single flow, undergoes changes in velocity and pressure in contact with the sprayed medium; and the liquid medium is sprayed by means of at least one high-pressure nozzle at a pressure of 5 to 600 bar into the flow of the gaseous medium, which has already passed through at least one constriction.

2. Process according to Claim 1, characterised in that the gaseous medium is enriched up to saturation with the liquid medium.

3. Process according to Claim 1, characterised in that the liquid medium is sprayed by means of the high-pressure nozzle (8, 9) at a pressure in the range from 60 to 600 bar.

4. Device for carrying out the process according to Claim 1, having means for generating a gas stream, at least one flow channel for guiding the gaseous medium, and at least one high-pressure nozzle leading into the flow channel; characterised in that, at least in a part (5) of the flow channel (1), a number of obstacles (14-27) aligned transversely to the axis of the flow channel (1) are provided at mutual spacings in the direction of flow, which obstacles greatly reduce the flow cross-section within narrow local limits and form cavities between themselves, wherein the outlet of the high-pressure nozzle (8, 9), of which there is at least one, is located in this part (5) of the flow channel, and the part (5, 5', 5''), provided with the obstacles (14-27), of the flow channel starts before the outlet of the high-pressure nozzle (8, 9) as viewed in the direction of flow.

5. Device according to Claim 4, characterised in that the obstacles are formed by transverse walls (16-20) of the type of orifice plates in the flow channel (1), so that there is a flow through them.

6. Device according to Claim 4, characterised in that obstacles with flow both through them and around them are arranged in the flow channel (1, 5').

7. Device according to one of Claims 4 to 6, characterised in that the obstacles (14-17,18) consist of flat or slightly curved thin walls aligned perpendicular to the axis of the flow channel (1, 5, 5', 5'').

8. Device according to one of Claims 4 to 7, characterised in that a plurality of flow channels of honeycomb-type overall cross-section are arranged parallel to one another, adjacent flow channels having common walls.

## Revendications

1. Procédé pour enrichir un milieu gazeux avec un milieu liquide par pulvérisation du milieu liquide dans un courant du milieu gazeux produit par refoulement forcé, caractérisé en ce qu'on fait passer le milieu gazeux à travers des rétrécissements et élargissements du passage d'écoulement qui se succèdent dans la direction de l'écoulement, les rétrécissements étant formés par des chicanes engagées dans le canal d'écoulement, qui définissent un passage libre et qui délimitent entre elles des cavités se comportant comme des cavités de résonance, de sorte que le milieu gazeux qu'on fait passer en un courant unique en contact avec le milieu pulvérisé subit des variations de vitesse et de pression, et le milieu liquide est pulvérisé, au moyen d'au moins une buse à haute pression possédant une pression de 5 à 600 bars dans le courant du milieu gazeux qui a déjà franchi au moins un rétrécissement.

2. Procédé selon la revendication 1, caractérisé en ce que le milieu gazeux est enrichi avec le milieu liquide jusqu'à saturation.

3. Procédé selon la revendication 1, caractérisé en ce que le milieu liquide est pulvérisé avec la buse à haute pression (8, 9) sous une pression de l'intervalle de 60 à 600 bars.

4. Installation pour la mise en oeuvre du procédé selon la revendication 1 , comprenant un dispositif pour produire un courant gazeux, au moins un canal d'écoulement pour le guidage du milieu gazeux et au moins une buse à haute pression qui débouche dans le canal d'écoulement, caractérisée en ce que, dans au moins une partie (5) du canal d'écoulement (1), sont prévues un certain nombre de chicanes (14-27) dirigées transversalement à l'axe du canal d'écoulement (1), disposées à un écartement mutuel, mesuré dans la direction de l'écoulement, qui réduisent localement la section d'écoulement dans une mesure étroitement limitée et forment entre elles des cavités, le débouché de la au moins une buse à haute pression (8, 9) étant disposé dans cette partie (5) du canal d'écoulement et la partie (5, 5', 5'') du canal d'écoulement qui est munie-es chicanes (14-27) commençant en amont du débouché de la buse à haute pression (8, 9), considéré dans le sens de l'écoulement.

5. Installation selon la revendication 4, caractérisée en ce que les chicanes sont formées par des parois transversales (16-20) du canal d'écoulement (1) présentant la forme de diaphragmes, de sorte qu'elles sont traversées par le courant.

6. Installation selon la revendication 4, caractérisée en ce que, dans le canal d'écoulement (1, 5'), sont disposées aussi bien des chicanes traversées par le courant que des chicanes contournées par le courant.

7. Installation selon les revendications 4 à 6, caractérisée en ce que les chicanes (14-17, 18, ...) sont constituées par des parois minces, plates ou légèrement incurvées, orientées perpendiculairement à l'axe du canal d'écoulement (1, 5, 5', 5'').

8. Installation selon une des revendications 4 à 7, caractérisé en ce que plusieurs canaux d'écoulement possédant une section globale en nid d'abeilles sont disposés parallèlement entre eux, les canaux d'écoulement adjacents présentant des parois communes.
